# FASCICULE DE BREVET EUROPEEN

(11) **EP 2 854 558 B1**
(45) Date de publication et mention de la délivrance du brevet: **02.08.2023**
(21) Numéro de dépôt: 13731371.4
(22) Date de dépôt: 28.05.2013
(51) Int. Cl.: C11B 3/12, A23D 9/013, C11B 1/02, A23L 33/115, A23L 33/12

(54) **PROCÉDÉ CONTINU D'ENRICHISSEMENT EN ESTERS ÉTHYLIQUES DE DHA D'UNE HUILE PRODUITE PAR DES MICROALGUES**
VERFAHREN ZUR KONTINUIERLICHEN ANREICHERUNG VON DHA ETHYLESTERN IN EINEM AUS MIKROALGEN HERGESTELLTEM ÖL
METHOD FOR CONTINUOUSLY ENRICHING AN OIL PRODUCED BY MICROALGAE WITH ETHYL ESTERS OF DHA

(30) Priorité: 29.05.2012 FR 1254942
(43) Date de publication de la demande: 08.04.2015
(73) Titulaire: Roquette Frères, 62136 Lestrem (FR)
(72) Inventeur: PATINIER, Samuel, F-59000 Lille (FR); LOOTEN, Philippe, F-59160 Lomme (FR)
(74) Mandataire: Plasseraud IP
(86) Numéro de dépôt international: PCT/FR2013/051186
(87) Numéro de publication internationale: WO 2013/178936

(56) Documents cités:
- WO-A1-00/73254
- WO-A1-2011/161702
- WO-A1-2013/013210
- US-A1- 2006 286 266
- US-A1- 2011 091 947
- US-A1- 2011 098 356
- US-A1- 2011 200 644
- BREIVIK H ET AL: "PREPARATION OF HIGHLY PURIFIED CONCENTRATES OF EICOSAPENTAENOIC ACID AND DOCOSAHEXAENOIC ACID", JOURNAL OF THE AMERICAN OIL CHEMISTS' SOCIETY, SPRINGER, DE, vol. 74, no. 11, 1 novembre 1997 (1997-11-01), pages 1425-1429, XP000736918, ISSN: 0003-021X, DOI: 10.1007/S11746-997-0248-0
- ARNE PIETSCH ET AL: "Concentration of squalene from shark liver oil by short-path distillation", EUROPEAN JOURNAL OF LIPID SCIENCE AND TECHNOLOGY, vol. 109, no. 11, 1 novembre 2007 (2007-11-01), pages 1077-1082, XP055055506, ISSN: 1438-7697, DOI: 10.1002/ejlt.200700039
- MARTÃN VALVERDE L ET AL: "Concentration of Docosahexaenoic Acid (DHA) by Selective Alcoholysis Catalyzed by Lipases", JOURNAL OF THE AMERICAN OIL CHEMISTS' SOCIETY, SPRINGER-VERLAG, BERLIN/HEIDELBERG, vol. 89, no. 9, 3 avril 2012 (2012-04-03), pages 1633-1645, XP035101011, ISSN: 1558-9331, DOI: 10.1007/S11746-012-2056-4
- HARALD BREIVIK ED - BREIVIK ET AL: "Chapter 5 concentrates", 1 janvier 2007 (2007-01-01), LONG-CHAIN OMEGA-3 SPECIALTY OILS; [OILY PRESS LIPID LIBRARY ; 21], BRIDGWATER : OILY PRESS, US, PAGE(S) 111 - 140, XP008134699, ISBN: 978-0-9552512-1-4 pages 114-117 pages 126-127

## Description

La présente invention est relative à un procédé continu permettant, industriellement, d'obtenir une huile riche en ester éthylique d'un acide gras naturel à partir d'une microalgue : l'acide docosahexaénoïque ou DHA.

Plus particulièrement, la présente invention est relative à l'élaboration d'une huile riche en ester éthylique de DHA à partir d'une huile issue de microalgue, qui à l'origine :
- est modérément riche en DHA et
- présente une quantité élevée en composés insaponifiables, essentiellement constitués de squalène.

Au sens de l'invention, on entend par « huile issue de microalgue », une huile extraite de microalgues de la famille des Thraustochytriales sp.

On entend au sens de l'invention par « microalgues de la famille des Thraustochytriales sp. » des microalgues appartenant aux espèces *Schizochytrium sp., Aurantiochytrium sp.* et *Thraustochytrium sp.*

Au sens de l'invention, on entend par huile « modérément riche en DHA », un huile contenant de 30 à 45 % de DHA en masse d'acides gras totaux (par mesure de simplification, on utilise également le terme « poids » d'acide gras totaux).

Au sens de l'invention, on entend également par « huile qui présente une quantité élevée en insaponifiables, essentiellement constitués de squalène », une huile renfermant de l'ordre de 10 à 30 % en poids d'insaponifiables, dont 15 à 25 % de squalène.

Enfin, on entend par « enrichissement d'une huile en ester éthylique de DHA issu de microalgues », un procédé permettant d'augmenter d'un facteur 1,5 à 2 le contenu en DHA de l'huile, en l'occurrence ici, de passer d'une teneur initiale en DHA comprise entre 30 à 45 % de DHA en poids d'acides gras totaux à une huile présentant une teneur en esters éthyliques de DHA comprise entre 60 et 70 % de DHA en poids d'acides gras totaux.

Les lipides constituent une des trois grandes familles de macronutriments avec les protéines et les glucides.

Parmi les lipides, on distingue notamment les triglycérides et les phospholipides.

Les triglycérides représentent environ 95 % des lipides alimentaires ingérés. Dans l'organisme, ils sont présents principalement dans les tissus adipeux et constituent la forme principale de stockage de l'énergie.

Les phospholipides sont des lipides de structure car ils sont des constituants des membranes cellulaires dont ils assurent, entre autre, la fluidité.

Triglycérides et phospholipides sont composés majoritairement d'acides gras qui sont à la fois apportés par l'alimentation et, pour certains d'entre eux, synthétisés par l'organisme.

Les sources d'alimentation en acides gras polyinsaturés dits « essentiels » sont les huiles végétales (principalement en acides gras oméga 6 et oméga 9) et les huiles de poisson, qui contiennent en particulier de grandes quantités d'acides gras oméga 3.

Les acides gras polyinsaturés sont classés en fonction de la position de la première double liaison, à partir de la fonction méthyle finale.

Ainsi, dans la nomenclature, pour oméga « x » ou « nx », « x » correspond à la position de la première insaturation.

La majorité des acides gras polyinsaturés d'intérêt biologique appartient à la famille des oméga 6 (acide arachidonique ou ARA) ou oméga 3 (acide eicosapentaénoïque ou EPA, acide docosahexaénoïque ou DHA).

En outre, dans la nomenclature, on définit également le nombre de carbone constituant la chaîne ; ainsi l'EPA est décrit comme C20:5 et le DHA comme C22:6.

Le « 5 » et « 6 » correspondent ainsi au nombre d'insaturations de la chaîne carbonée présentés respectivement par l'EPA et par le DHA.

Le DHA, de la famille des acides gras oméga 3, est un acide gras que l'organisme sait synthétiser à partir de l'acide alpha-linolénique, ou qui est apporté par la consommation de poissons gras (thon, saumon, hareng...).

Le DHA joue un rôle important dans la structure des membranes et dans le développement et le fonctionnement du cerveau et de la rétine.

Les huiles de poisson sont utilisés principalement comme source d'acides gras de type oméga 3, tels que le DHA et l'EPA, mais on les trouve également dans les huiles de microalgues où on les extrait soit en mélange, soit séparément, comme c'est le cas par exemple des huiles issues de certaines souches sélectionnées, telles que celles du genre *Schizochytrium,* qui ne contiennent que des traces d'EPA mais de fortes teneurs en DHA.

Les méthodes conventionnelles pour enrichir les huiles de poisson en DHA et/ou EPA reposent sur la sélectivité par rapport à la longueur des chaînes des acides gras constitutifs des huiles ou leur degré d'insaturation.

Il est tout d'abord nécessaire de procéder à la séparation des acides gras reliés sur le squelette glycéridique afin de pouvoir ensuite isoler les chaînes de DHA et/ou d'EPA.

Cette opération de séparation des acides gras de la chaîne glycérol est réalisée par transestérification éthanolique (éthanolyse).

Les processus d'enrichissement les plus couramment utilisés ensuite, mis en oeuvre pour les acides gras en tant que tels ou sur leurs esters, sont :
- la cristallisation,
- l'extraction à contre-courant,
- la distillation moléculaire, ou
- la chromatographie préparative.

La plupart du temps, différents procédés sont combinés afin d'obtenir un fort enrichissement.

Cependant, ces processus ont les inconvénients suivants :
- les procédés d'enrichissement à haute température donnent lieu des dégradations thermiques des acides gras (isomérisation, peroxydation, oligomérisation).
- l'inconvénient des techniques de chromatographie reste l'utilisation de quantités importantes de solvants, souvent toxiques.

En outre, la production à grande échelle par ces techniques est loin d'être évidente.

Pour ces raisons, des méthodes alternatives ont été développées et étudiées, méthodes qui reposent sur l'utilisation des fluides supercritiques, notamment par des procédés de fractionnement par CO₂ supercritique.

Une étape préalable à l'enrichissement en DHA et/ou EPA des huiles de poisson par CO₂ supercritique est la transestérification des acides gras, à l'aide de méthanol ou d'éthanol.

Le processus de fractionnement des esters éthyliques des acides gras par le CO₂ supercritique a par exemple été décrit abondamment dans la littérature.

Un procédé de purification d'esters d'acides gras polyinsaturés a été décrit dans la demande de brevet US2011/0098356, ainsi que dans la demande internationale PCT/CA2000/000643.

La demande internationale PCT/IS2011/050011 décrit un procédé de séparation des acides gras polyinsaturés d'acides gras à chaîne longue insaturés ou moins saturés.

La demande de brevet US20110091947 décrit un procédé de purification à haut degré de pureté d'acides gras oméga-3 hautement insaturés.

La demande de brevet US20060286266 décrit une concentration d'esters alkyliques d'acides gras produite par des réactions enzymatiques avec du glycérol.

Martân Valverde L et al. ont décrit des concentrations de DHA dans Journal of the American Oil Chemists' Society, Springer- Verlag, Berlin/Heidelberg, vol. 89, no. 9, 3 avril 2012 (2012-04-03), pages 1633-1645.

Breivik H et al. ont décrit également des concentrations d'EPA et de DHA dans Journal of the American Oil Chemists' Society, SPRINGER, DE, vol. 74, no. 11, 1 novembre 1997 (1997-11-01), pages 1425-1429.

Les omégas-3 à longue chaine ont également discutés dans Breivik H et al.: "Chapter 5 concentrates", 1 janvier 2007 (2007-01-01), Long-Chain Omega-3 Specialty Oils; page(s) 111 - 140.

La demande internationale PCT/US2012/047730 décrit des huiles microbiennes enrichies en acides gras polyinsaturés, et la demande de brevet US20110200644 décrit des émulsions d'ester de DHA.

Il convient toutefois de noter que la majorité des processus cités décrivent surtout l'enrichissement conjoint en esters éthyliques d'EPA et de DHA, et non en DHA uniquement.

Par ailleurs, la grande majorité de ces procédés :
- sont des procédés discontinus, par « batch »,
- utilisent des quantités trop importantes de fluide supercritique,
- ont un faible rendement,
- et ont finalement une faible productivité.

Par ailleurs, la température de 100°C imposée dans les colonnes dans de nombreux cas peut provoquer la dégradation des acides gras.

Les pressions appliquées sont également trop fortes, et leur réduction a pour conséquence directe l'augmentation de la consommation en CO₂ supercritique.

En d'autres termes, ces procédés ne sont pas utilisables à l'échelle industrielle dans des conditions économiquement viables.

Dans la demande de brevet JP 2005-255971, il est par exemple décrit un procédé d'enrichissement d'huile de poisson en esters éthyliques d'EPA et de DHA.

Les plages de température et de pression sont respectivement de 35 à 200°C et de 100.10⁵ Pa à 500.10⁵ Pa.

Les auteurs recommandent deux extractions successives en vue d'obtenir des teneurs élevées.

Une première extraction est effectuée sur la matière première, et une seconde extraction est effectuée sur le résidu de la première opération.

La colonne utilisée fait 3 m de haut pour un diamètre de 50 mm. Il comprend 6 enceintes distinctes de chauffage.

Les taux de solvant, définis comme le rapport du débit de CO₂ supercritique au débit d'huile traitée, utilisés pour obtenir des pourcentages élevés de DHA restent élevés.

Ces deux extractions successives compliquent également le procédé et le rendent industriellement inapplicable.

Il apparaît à la lecture de ces éléments que le choix de la technologie d'enrichissement en acides gras des huiles par fluide supercritique est privilégiée, mais nécessite encore des travaux d'optimisation.

Comme évoqué plus haut, une autre source d'acides gras oméga 3 sont les microalgues.

Cependant, la situation est bien plus complexe dans le domaine des huiles de microalgues car d'autres difficultés s'ajoutent, liées à la présence dans les huiles de microalgues de composés insaponifiables.

C'est ainsi que si l'opération de transestérification couramment opérée sur les huiles de poisson ne pose aucun problème technique majeur, cela devient problématique pour les huiles de microalgues, dès lors que la transestérification des huiles brutes est quasiment impossible sur le plan pratique à grande échelle.

Cette impossibilité technique est liée à la présence à des teneurs variables, mais souvent élevées, de composés insaponifiables, tel que le squalène.

En conséquence, on déplore des pertes importantes en composés valorisables.

Le squalène est un hydrocarbure polyinsaturé d'intérêt pharmaceutique, cosmétologique et diététique, présent en particulier dans les huiles de microalgues.

Il s'y trouve à des teneurs variables qui sont parfois élevées, dépassant 15 % en masse dans certaines souches sélectionnées telles que celles du genre *Schizochytrium.*

Dans l'état de l'art, il est connu que l'on peut réaliser la séparation du squalène des lipides, constitués essentiellement de triglycérides, par exemple par distillation moléculaire, mais au prix de plusieurs étapes successives si l'on veut extraire le squalène de l'huile et produire une huile ne contenant plus que des traces de squalène. Arne Pietsch et al. décrivent la purification du squalène à partir d'une huile brute de poisson dans European Journal Of Lipid Science And Technology, vol. 109, no. 11, 1 novembre 2007 (2007-11-01), pages 1077-1082.

Comme tous les composants des huiles de microalgues sont particulièrement sensibles à la chaleur, cette méthode doit être conduite classiquement sous un vide très poussé, requérant des installations de très grand volume vu leur très faible productivité.

Il convient donc de proposer d'autres voies :
- plus efficaces, si l'on souhaite utiliser la distillation moléculaire, que les conduites classiquement mises en oeuvre, ou
- fonctionnant à une température modérée et garantissant la protection des produits insaturés très instables à l'oxydation de tout contact avec l'air, tout en étant facilement industrialisable jusqu'à des capacités de traitement de centaines ou de milliers de tonnes d'huile traitées par an.

A la connaissance de la société Demanderesse, aucun procédé efficace et industrialisable d'enrichissement d'huiles en esters éthyliques de DHA à partir de microalgues, à l'aide de technologie de distillation moléculaire, n'est réellement accessible à l'homme du métier.

**Soucieuse de mettre au point un procédé efficace d'enrichissement de DHA produit par microalgues,** la société Demanderesse a développé ses propres recherches et a réussi à adapter la technologie de distillation moléculaire de manière à garantir un enrichissement en DHA de plus de deux fois le contenu de l'huile initiale.

La présente invention est donc relative à un procédé de préparation d'une huile enrichie en esters éthyliques de DHA produit par fermentation de microorganismes, caractérisé en ce qu'il comprend une étape de purification par distillation moléculaire dite de « court trajet ».

Les microorganismes sont des microalgues appartenant à la famille des Thraustochytriales sp., de préférence des microalgues appartenant aux espèces *Schizochytrium sp., Aurantiochytrium sp.* et *Thraustochytrium sp.*

Plus précisément, la présente invention a pour objet un procédé de préparation d'une huile enrichie en esters éthyliques de l'acide docosahexaénoïque (DHA) produit par fermentation de microalgues de la famille des Thraustochytriales, caractérisé en ce qu'il comprend les étapes suivantes :
1) préparer une huile brute contenant un mélange de triglycérides riches en DHA et d'insaponifiables composés essentiellement de squalène, à partir d'une fermentation de microalgues de la famille des Thraustochytriales,
2) éventuellement, raffiner l'huile brute ainsi obtenue par un enchaînement d'étapes de dégommage, désacidification, décoloration et désodorisation,
3) extraire le squalène par distillation moléculaire dite de "court trajet" de manière à obtenir un raffinat débarrassé du squalène,
4) trans-estérifier le raffinat ainsi obtenu par trans-estérification alcoolique en présence d'un catalyseur basique ou enzymatique, de préférence enzymatique,
5) fractionner le mélange d'esters d'acides gras à l'étape 4) par distillation moléculaire dite de "court trajet", de manière à obtenir un extrait riche en esters d'acides gras à chaînes courtes et un raffinat très riche en esters d'acides gras à chaînes longues,
6) purifier le mélange d'esters d'acides gras à chaîne longue obtenus lors de l'étape 5) par distillation moléculaire dite de "court trajet", de manière à obtenir un extrait très riche en esters à chaîne longue débarrassé de ses impuretés,
7) éventuellement, raffiner ledit extrait très riche en esters à chaîne longue par un enchaînement d'étapes de décoloration et désodorisation,
8) recueillir l'huile enrichie en esters éthyliques de DHA ainsi obtenue.

### Mise en oeuvre de la distillation moléculaire.

Dans le procédé de préparation d'une huile enrichie en esters éthyliques de DHA conforme à l'invention, on met en oeuvre un procédé caractérisé en ce qu'il comprend les étapes suivantes :
1) préparer une huile brute contenant un mélange de triglycérides riches en DHA et d'insaponifiables composés essentiellement de squalène, à partir d'une fermentation de microalgues de la famille des Thraustochytriales,
2) éventuellement, raffiner l'huile brute ainsi obtenue par un enchaînement d'étapes de dégommage, désacidification, décoloration et désodorisation,
3) extraire le squalène par distillation moléculaire dite de "court trajet" de manière à obtenir un raffinat débarrassé du squalène,
4) transestérifier le raffinat ainsi obtenu par transestérification alcoolique en présence d'un catalyseur basique ou enzymatique, de préférence enzymatique,
5) fractionner le mélange d'esters d'acides gras à l'étape 4) par distillation moléculaire dite de "court trajet", de manière à obtenir un extrait riche en esters d'acides gras à chaînes courtes et un raffinat très riche en esters d'acides gras à chaînes longues,
6) purifier le mélange d'esters d'acides gras à chaîne longue obtenus lors de l'étape 5) par distillation moléculaire dite de "court trajet", de manière à obtenir un extrait très riche en esters à chaîne longue débarrassé de ses impuretés,
7) éventuellement, raffiner cette fraction extrait très riche en esters à chaîne longue par un enchaînement d'étapes de décoloration et désodorisation,
8) recueillir la composition enrichie en esters éthyliques de DHA ainsi obtenue.

La première étape de ce procédé conforme à l'invention consiste à préparer une huile brute contenant un mélange de triglycérides riches en DHA et d'insaponifiables composés essentiellement de squalène, à partir d'une fermentation de microalgues de la famille des Thraustochytriales.

Comme microalgues appartenant à la famille des Thraustochytriales, les souches commercialisées suivantes sont par exemple disponibles :
- *Schizochytrium sp.* référencée ATCC 20888,
- *Aurantiochytrium sp.* référencée ATCC PRA 276,

Par ailleurs, la société Demanderesse dispose également de sa propre souche de production, une *Schizochytrium sp.* déposée le 14 avril 2011 en France auprès de la Collection Nationale de Cultures de Microorganismes de l'Institut Pasteur sous le n°CNCM I-4469 et également déposée en Chine auprès du CHINA CENTER FOR TYPE CULTURE COLLECTION de l'université de Wuhan, Wuhan 430072, P.R. China sous le n° M 209118.

La culture est réalisée en conditions hétérotrophiques. Généralement, l'étape de culture comprend une étape de préculture, pour revivifier la souche, puis une étape de culture ou de fermentation proprement dite. Cette dernière étape correspond à l'étape de production des composés lipidiques d'intérêt.

Les conditions de culture de ces microalgues sont bien connues dans le domaine. La biomasse est ensuite traitée de manière à obtenir une huile brute contenant un mélange de DHA et d'insaponifiables composés essentiellement de squalène.

Ces traitements peuvent être réalisés par toute méthode connue par ailleurs de l'homme du métier.

Elle permet d'obtenir une huile brute constituée de glycérides (triglycérides majoritaire), d'insaponifiables (squalène majoritaire) et éventuellement d'acides gras libres et de phospholipides en proportions moindres. Comme il sera exemplifié ci-après, le contenu en DHA entre 30 à 45 % en poids d'acides gras totaux et d'insaponifiables entre 10 à 30 % en poids, dont 15 à 25 % de squalène, peut être aisément obtenu à partir de la souche CNCM I-4469 décrite ci-dessus.

La deuxième étape de ce procédé conforme à l'invention consiste à éventuellement raffiner l'huile brute ainsi obtenue par un enchaînement d'étapes de dégommage, désacidification, décoloration et désodorisation.

L'huile brute riche en squalène subit ainsi préalablement un raffinage grossier avant extraction du squalène.

Une ou plusieurs des étapes suivantes peuvent être envisagées :
- *Dégommage* : élimination des phopholipides par précipitation en milieu acide,
- *Désacidification* : neutralisation des acides gras libres par l'emploi d'une base. L'utilisation de la distillation moléculaire pour l'élimination des acides gras libres semble à proscrire afin d'éviter l'entrainement du squalène,
- *Décoloration* : par traitement au charbon actif,
- *Désodorisation* (distillation sous vide, stripage vapeur...).

Ces étapes de raffinage sont des étapes couramment utilisées par les spécialistes du domaine en raffinage d'huile végétale.

La troisième étape de ce procédé conforme à l'invention consiste à extraire le squalène par distillation moléculaire dite de "court trajet" de manière à obtenir un raffinat débarrassé du squalène.

Le squalène de l'huile brute (ou partiellement purifiée) est extrait par distillation moléculaire.

Pour un vide inférieur à 0,1 mbar, le point d'ébullition du squalène est de l'ordre de 200°C.

Le vide poussé permet de limiter la température et ainsi limiter les risques de dégradation/polymérisation du squalène et des acides gras polyinsaturés.

La société Demanderesse a trouvé qu'il était important de régler le temps de séjour sur cette installation à une durée très faible, inférieure à une minute. De manière générale dans la présente demande, il est de préférence entendu que le « court trajet » s'entend d'une mise en contact d'une durée inférieure 1 minute.

A partir du réservoir d'alimentation inerté à l'azote, l'huile est ainsi pompée à travers un premier circuit thermostaté dans une gamme de 25 à 150°C vers le dégazeur (élimination des traces d'eau et solvant).

En sortie du dégazeur, l'huile est pompée dans la chambre d'évaporation (dite « short path ») à travers un circuit thermostaté dans une gamme de température de 50 à 150°C, de préférence de 100 à 140 °C, en particulier environ 120 °C.

La température de l'évaporateur est ajustée dans une gamme de 150 à 250°C, de préférence de 200 à 240 °C, en particulier environ 220 °C..

Le condenseur est réglé dans une gamme de température de 0 à 50°C, de préférence entre 10 et 30 °C, en particulier environ 20 °C.

La pression dans la chambre d'évaporation est ajustée à un vide poussé inférieur à 10⁻² mbar, de préférence inférieur à 10⁻³ mbar.

Le distillat contenant majoritairement le squalène et le résidu contenant majoritairement les triglycérides sont acheminés via les circuits de collecte vers les cuves de stockage inertées.

La teneur en squalène dans le raffinat est inférieure à 5 %, de préférence, inférieure à 2 %.

L'élimination du squalène permet d'obtenir une fraction d'intérêt (triglycérides riches en DHA) purifiée (le raffinat) qui peut alors entrer dans le chainage d'opérations d'enrichissement en DHA sous forme d'esters éthyliques.

Ce raffinat présente un profil d'acides gras contenant de l'ordre de 40 % en poids de DHA.

La quatrième étape de ce procédé conforme à l'invention consiste à transestérifier le raffinat ainsi obtenu par transestérification alcoolique en présence d'un catalyseur basique ou enzymatique, de préférence enzymatique.

Pour permettre l'enrichissement en DHA, il est nécessaire de procéder à la séparation des acides gras reliés sur le squelette glycérique afin de pouvoir ensuite isoler les chaines DHA.

Cette opération de séparation des acides gras de la chaine glycérol est préférentiellement réalisée par transestérification éthanolique (éthanolyse) enzymatique.

Cette conversion s'accompagne d'une libération de glycérol.

L'éthanolyse enzymatique est effectuée en opération « Batch » avec l'enzyme commerciale N 435 (*Candida antartica*) de NOVOZYME à 50°C avec l'éthanol en proportion stoechiométrique.

Dans ces conditions, un taux de conversion supérieur à 90% est obtenue en environ 8 h de réaction.

En fin de réaction, les acides gras sont répartis majoritairement dans la fraction convertie en esters éthyliques (plus de 90 %), le reste étant resté sous forme glycérides résiduels (mono-di-triglycérides).

Avant de procéder au fractionnement des esters éthyliques, le mélange réactionnel de fin de conversion enzymatique subit une étape de filtration afin d'extraire l'enzyme.

Le glycérol est séparé par décantation ou centrifugation. Le mélange peut également être lavé à l'eau pour éliminer le glycérol résiduel.

Si la concentration résiduelle en éthanol est élevée, celui-ci peut être éliminé par évaporation sous vide.

La cinquième étape de ce procédé conforme à l'invention consiste à fractionner le mélange d'esters d'acides gras obtenu à l'étape 4) par distillation moléculaire dite de "court trajet", de manière à obtenir un extrait riche en esters d'acides gras à chaînes courtes et un raffinat très riche en esters d'acides gras à chaînes longues.

Le mélange d'esters éthyliques obtenus comme décrit à l'étape 4 présente un profil d'acide gras correspondant à l'huile de départ et donc incluant les acides gras autres que le DHA d'intérêt.

L'objectif de l'opération de fractionnement est d'éliminer au maximum les acides gras de chaîne plus courte (< C 22) que le DHA.

La technologie de distillation employée pour réaliser cette opération exploite la différence de volatilité des esters éthyliques (qui dépend de leur masse moléculaire et de la longueur de leur chaîne aliphatique).

Comme expliqué ci-avant, le vide poussé ainsi que le temps de séjour très faible sur cette technologie (inférieur à une minute) permettent de limiter la température et ainsi limiter les risques de dégradation/polymérisation des acides gras polyinsaturés.

Pour un vide inférieur à 0,1 mbar, le point d'ébullition des esters éthyliques est généralement dans une gamme de températures inférieures à 250°C.

Cette opération s'effectue en réalité en deux étapes :
- la première étape de distillation moléculaire est le fractionnement en tant que tel, l'objectif étant de séparer la fraction esters éthylique « de courte chaîne » pour concentrer le résidu en acides gras polyinsaturés,
- la seconde étape est plutôt une étape de purification, dans le sens où les esters éthyliques concentrés en acides gras polyinsaturés sont séparés des impuretés lourdes (glycérides résiduels, stérols, pigments, insaponifiables...).

A partir du réservoir d'alimentation inerté à l'azote, le mélange issu de l'éthanolyse est envoyé à travers un premier circuit thermostaté dans une gamme de 25 à 100°C vers le dégazeur (élimination des traces d'éthanol), par exemple de 70 à 100 °C, notamment environ 100 °C.

En sortie du dégazeur, l'huile est pompée dans la chambre d'évaporation (dite « short path ») à travers un circuit thermostaté dans une gamme de température de 50 à 100°C, par exemple de 70 à 90 °C, notamment environ 85 °C.

La pression dans la chambre d'évaporation est ajustée à un vide poussé inférieur à 10⁻² mbar, de préférence inférieur à 10⁻³ mbar.

Le condenseur est réglé dans une gamme de température de 0 à 50°C, de préférence entre 10 et 30 °C, en particulier environ 20 °C.

La température de l'évaporateur est ajustée dans une gamme de 100 à 200°C, de préférence entre 100 et 150 °C, notamment environ 110 °C.

La température est ajustée pour obtenir un ratio massique raffinat/distillat correspondant à la prédiction théorique permettant une séparation optimisant pureté et rendement en acides gras polyinsaturés.

Le distillat, contenant majoritairement les esters éthyliques « à courtes chaînes » et le raffinat contenant majoritairement les esters éthyliques « à longues chaînes » ainsi que les impuretés, sont acheminés via les circuits de collecte vers les cuves de stockage inertées.

La teneur en esters éthyliques de DHA (pourcentage massique) dans le raffinat est supérieure à 45%, de préférence supérieur à 50%.

Le teneur en DHA dans le distillat est inférieure à 20%, de préférence inférieure à 10 %.

La sixième étape de ce procédé conforme à l'invention consiste à purifier le mélange d'esters d'acides gras à chaîne longue obtenus lors de l'étape 5) par distillation moléculaire dite de "court trajet", de manière à obtenir un extrait très riche en esters à chaîne longue débarrassé de ses impuretés.

A partir du réservoir d'alimentation inerté à l'azote, le raffinat obtenu au terme de l'étape 5) est envoyé à travers un premier circuit thermostaté dans une gamme de 25 à 100°C vers le dégazeur), par exemple de 70 à 100 °C, notamment environ 100 °C.

En sortie du dégazeur, l'huile est pompée dans la chambre d'évaporation (« short path ») à travers un circuit thermostaté dans une gamme de température de 50 à 150°C, par exemple de 70 à 90 °C, notamment environ 85 °C.

La pression dans la chambre d'évaporation est ajustée à un vide poussé inférieur à 10⁻² mbar, de préférence inférieur à 10⁻³ mbar.

Le condenseur est réglé dans une gamme de température de 0 à 50°C, de préférence entre 10 et 30 °C, en particulier environ 20 °C.

La température de l'évaporateur est ajustée dans une gamme de 100 à 250°C, de préférence entre 180 et 220 °C, notamment environ 200 °C. La température est ajustée pour obtenir un ratio massique résidu/distillat correspondant à la prédiction théorique permettant une séparation efficace des impuretés.

Le distillat, contenant majoritairement les esters éthyliques « à longues chaînes » purifiés et le résidu contenant les impuretés, est acheminé via les circuits de collecte vers les cuves de stockage inertées.

La teneur en esters éthyliques de DHA (pourcentage massique) dans le distillat est supérieure à 50 %, de préférence supérieur à 55 %.

La teneur en DHA dans le résidu est inférieure à 30%, de préférence inférieure à 20%. Le résidu concentre ainsi les impuretés (insaponifiables, glycérides résiduels, piments...).

La septième étape de ce procédé conforme à l'invention consiste à éventuellement, raffiner cette fraction extrait très riche en esters à chaîne longue par un enchaînement d'étapes de décoloration et désodorisation.

Bien que purifiée lors de la sixième étape, l'extrait d'esters éthyliques enrichis en DHA peut subir un raffinage complémentaire si nécessaire, consistant en une étape de décoloration et une étape de désodorisation :
- une étape de décoloration afin de réduire la coloration jaunâtre.

Cette étape de décoloration est effectuée sur terre de décoloration comme le charbon actif de façon similaire à la décoloration classiquement utilisée en raffinage d'huile végétale.
- une étape de désodorisation, réalisée par stripage vapeur sous vide.

La huitième étape de ce second mode préférentiel du procédé conforme à l'invention consiste enfin à recueillir la composition enrichie en esters éthyliques de DHA ainsi obtenue.

Les esters éthyliques de DHA ainsi purifiés sont stockés sous atmosphère contrôlée (inertée à l'azote idéalement).

Un ajout d'antioxydants peut être favorable à la stabilisation de cette fraction.

La présente description concerne en outre l'utilisation de la composition enrichie en esters éthyliques de DHA obtenue par le procédé selon la présente invention dans les domaines alimentaires.

L'invention sera mieux comprise à l'aide des exemples qui suivent, lesquels se veulent illustratifs et non limitatifs.

### Exemple 1 : Préparation d'une huile contenant entre 30 à 45 % de DHA en poids d'acides gras totaux et entre 10 à 30 % en poids d'insaponifiables, dont 15 à 25 % de squalène à partir de la souche Schizochytrium sp CNCM I-4469

Cet exemple illustre le procédé d'obtention d'une huile brute renfermant un mélange de DHA et d'insaponifiables, constitué essentiellement de squalène produite par fermentation de la microalgue *Schizochytrium sp.* appartenant à la société Demanderesse (déposée le 14 avril 2011 en France auprès de la Collection Nationale de Cultures de Microorganismes de l'institut Pasteur sous le n°CNCM I-4469).

La fermentation a été conduite ici en deux phases de préculture successives préalables avant la phase de culture / production proprement dite en réacteur de 20 I.

Pour cette expérimentation, l'ajout des vitamines a été assuré dans le premier milieu de préculture, mais a été optionnel dans le second milieu de préculture et en production.

Les milieux de préculture présentaient alors la composition présentée dans les tableaux I et II suivants :

**Tableau I**

| Milieu de la première préculture | % |
|---|---|
| Glucose | 3 |
| Extraits de levure | 0,4 |
| Glutamate de sodium | 6,42 |
| Na Cl | 1,25 |
| MgSO4 | 0,4 |
| KCI | 0,05 |
| CaCl2 | 0,01 |
| NaHCO3 | 0,05 |
| KH2PO4 | 0,4 |
| Mélange vitamines | 0,14 |
| Oligo-éléments | 0,8 |

**Tableau II**

| Milieu de la seconde préculture | % |
|---|---|
| Glucose | 8,57 |
| Glutamate de sodium | 6,42 |
| Extraits de levure | 0,64 |
| Na Cl | 2 |
| KH2PO4 | 0,64 |
| MgSO4 | 2,29 |
| CaCl2 | 0,03 |
| NaHCO3 | 0,03 |
| Na2 SO4 | 0,03 |
| Mélange de vitamines | 0,14 |
| Oligo-éléments | 0,2 |

D'une manière générale, on a utilisé de l'anti-mousse Clerol « FBA3107 » à 1 ml/l. Eventuellement, on a utilisé 50 mg/l de Pénicilline G "sodium salt" afin d'éviter la croissance de bactéries contaminantes.

Le glucose a été stérilisé avec le KH₂PO₄ et séparément du reste du milieu car on a évité ainsi la formation d'un précipité (Ammonium-Phosphate-Magnésium). Le mélange des vitamines et les oligo-éléments ont été ajoutés après filtration stérilisante. La composition du milieu de culture / production est donné par le tableau III suivant.

**Tableau III**

| | % |
|---|---|
| Glucose Ajout à T0 | 7,5 |
| Urée | 1 |
| Extraits de levure | 1,2 |
| Na Cl | 0,25 |
| KH2PO4 | 0,96 |
| MgSO4 | 1,2 |
| CaCl2 | 0,12 |
| NaHCO3 | 0,12 |
| KCL | 0,08 |
| Ajout du mélange de vitamines | 0,4 |
| Oligo-éléments | 0,56 |

La composition des mélanges de vitamines et des oligoéléments est donnée dans les tableaux IV et V suivants :

**Tableau IV**

| Mélange vitamines | g/L |
|---|---|
| B1 | 45 |
| B6 | 45 |
| B12 | 0.25 |

**Tableau V**

| Oligo-éléments | g/L |
|---|---|
| MnCl2 2h20 | 8.60 |
| CoCl2 6H2O | 0.2 |
| NiSO4 6H2O | 7.50 |
| Na2MoO4 | |
| 2H2O | 0.15 |
| ZnSO4 7H2O | 5.70 |
| Cu So4 5h2O | 6.50 |
| FeSO4 7 H2O | 32.00 |
| ZnCl2 | 1.50 |

### Conditions de précultures

La première préculture a été réalisée en Erlenmeyers de 500 ml munis de baffles, dans lesquels on a ajouté une goutte d'antimousse CLEAROL FBA 3107 commercialisé par la société COGNIS GmbH Düsseldorf.

Le milieu de culture a été filtré après dissolution complète de ses constituants, complété éventuellement avec de la pénicilline G "sodium sait" à raison de 0,25 mg/l.

L'inoculation a été réalisée par prélèvement de colonies de microalgues cultivées en boîte de Pétri (à raison d'une oese de 10 µl).

L'incubation a duré 24 à 36 heures, à une température de 28°C, sous agitation à 100 rpm (sur agitateur orbital).

La biomasse décantant (ou adhérant à la paroi), on a pris bien soin de prélever 3 à 5 ml après avoir bien agité l'Erlenmeyer.

Pour la seconde préculture, on a utilisé des Erlenmeyers de 2 I, muni de baffles et de tuyauterie.

On a ajouté une goutte d'antimousse et l'extrait de levures dans 100 ml d'eau.

L'ensemble des constituants du milieu a été filtré après dissolution dans 300 ml d'eau déminéralisée. On pouvait éventuellement ajouter de la pénicilline G "sodium sait" et au préalable dans l'Erlenmeyer une goutte d'antimousse avant sa stérilisation.

L'ensemencement s'est fait ensuite avec 3 à 5 ml de la première préculture.

L'incubation a été réalisée à 28°C pendant encore 24 à 36 heures, sous agitation à 100 rpm.

### Production en réacteur de 20 l

La culture proprement dite a été réalisée de la manière suivante en réacteur de 20 l.
- stérilisation du milieu pour partie dans le réacteur, et séparément pour l'autre partie de manière à éviter la formation d'un précipité,
- ensemencement réalisé à partir de la biomasse produite en fin de seconde préculture à raison de 0,5 % v/v du milieu de culture,
- culture maintenue à 30°C
- taux de transfert d'oxygène fixé à 35 - 40 mmoles/l/h,
- aération de 0,2 à 0,3 VVM,
- pH initial > 5,5.
- alimentation du glucose dès que la concentration est > 20 %, de manière à maintenir une concentration en glucose comprise entre 15 et 70 g/l.

Le tableau IV suivant présente les résultats obtenus la *Schizochytrium sp.* de la société Demanderesse.

**Tableau IV :**

| Essais | E |
|---|---|
| Température des précultures (°C) | 28 |
| Température de culture (C) | 30 |
| Titre en squalène en fin de culture (g/l) | 4,4 |
| Biomasse (g/l) | 54 |
| g/ 100 g de squalène sur biomasse sèche | 8,2 |

### Récupération de la biomasse

La biomasse extraite du fermenteur et lavée des solubles interstitiels par succession de deux séries de concentration par centrifugation (5 minutes à 5000 g) et dilution de la biomasse (à raison de 1/3 Vculot / Veau).

La concentration cellulaire sèche sur la matière sèche brute totale est de 95 %. La matière sèche est ensuite ajustée à 12 %.

### Obtention de l'huile brute

La biomasse lavée est agitée dans un réacteur labo de type Fermenteur 2 l (tel que ceux commercialisés par la société Interscience) équipé avec une hélice marine et chicanes.

Ce système permet de limiter l'émulsification du lysat cellulaire généré tout en permettant un bon mélange indispensable pour l'action de l'enzyme lytique.

La température est ajustée à 60°C et le pH est régulé à environ 8 avec de la soude.

Ces conditions sont optimales pour l'activité de l'enzyme Alcalase (Novozymes) ajoutée à hauteur de 1%/sec.

La durée de la lyse est fixée à 4 h.

En fin de lyse, on ajoute 10 % d'éthanol (V_{éthanol}/V_{lysat}) dans le mélange réactionnel (émulsion huile dans eau) maintenue 15 min supplémentaires sous agitation.

On obtient alors une huile brute contenant de l'ordre de 35 % en poids de DHA et de l'ordre de 15 % en poids de squalène.

### Exemple 2 : Enrichissement d'une huile en esters éthyliques de DHA par distillation moléculaire

On utilise une huile d'algues *Schizochytrium sp.* produite à partir d'algues *Schizochytrium* cultivées dans un fermenteur de 1 m³ selon des conditions opératoires extrapolées de celles de l'exemple 1.

La fraction triglycérides présente le profil d'acide gras suivant :

| **Nomenclature** | **Profil acides gras huile (%aire p/r Agt) **** |
|---|---|
| C14 | 7,6 |
| C16 | 20 |
| Osbond | 15,3 |
| DHA | **40,2** |
| *Autres* | 16,9 |
| **Total** | 100 |

| | |
|---|---|
| ** pourcentage du composé relativement à la fraction acides gras totaux (répartition de surface en CPG) | |

La fraction insaponifiables est essentiellement constituées de squalène (~21,8 %/brut).

### Etape 1 : Traitement de l'huile brute en vue d'éliminer le squalène

Une unité de Short Path Distillation de type Short Path Distillation VTA VK 83-6-SKR-T est utilisée.

A partir du réservoir d'alimentation inerté à l'azote, 8 kg d'huile sont pompés à 3,5 kg/h vers le dégazeur à une température de 120°C.

En sortie du dégazeur, l'huile traverse la chambre d'évaporation ("court trajet") à travers un circuit maintenu à 120°C.

La température de l'évaporateur est ajustée à 220°C.

Le condenseur est réglé sur une température de 20°C. Le vide dans la chambre d'évaporation est poussé au maximum (< 10⁻³ mbar).

Le distillat contenant le squalène et le résidu contenant les triglycérides sont acheminés via les circuits de collecte vers les cuves de stockage inertées.

A ce stade, environ 1,5 kg de distillat et 6 kg de résidu sont récupérés.

La teneur en squalène dans le distillat est égale à 94 %.

La teneur en squalène du résidu est inférieure à 2 %.

### Etape 2 : Transestérification de l'huile traitée

La transestérification est conduite en mode batch à partir des 6 kg de résidu de l'étape 1. La réaction est réalisée à 50°C dans un réacteur à double enveloppe, agité, fermé et inerté à l'azote avec 600 g de Novozyme 435, 680 g d'éthanol absolu.

Le mélange réactionnel est maintenu dans ces conditions pendant 8h.

En fin de réaction, l'enzyme est séparée par filtration sur une toile de nylon de 10 µm. Le filtrat est centrifugé (5 min à 10 000 G) pour retirer le glycérol. On récupère environ 6 kg d'une huile dont la fraction triglycéride a été convertie à hauteur de 90% en esters éthyliques.

La composition est la suivante :

| Nomenclature | g/100g brut* | %aire p/r AGt" |
|---|---|---|
| C14 | 7 | 7.7 |
| C16 | 16,6 | 18.2 |
| Osbond | 12.9 | 14.5 |
| DHA | 33.6 | 38 |
| *Autres* | *19.3* | *21.6* |
| *Total* | *89.4* | *100* |

| | | |
|---|---|---|
| * pourcentage massique du composé dans le mélange brut ** pourcentage du composé relativement à la fraction esters éthyliques (répartition de surface en CPG) | | |

### Etape 3 : Fractionnement des esters

Une unité de Short Path Distillation de type Short Path Distillation VTA VK 83-6-SKR-T est utilisée.

A partir du réservoir d'alimentation inerté à l'azote, 6 kg du produit de conversion obtenu à l'étape 2 sont pompés à 1 kg/h vers le dégazeur à une température de 100°C.

En sortie du dégazeur, les esters éthyliques traversent la chambre d'évaporation ("court trajet") à travers un circuit maintenu à 85°C.

La température de l'évaporateur est ajustée à 110°C.

Le condenseur est réglé sur une température de 20°C. Le vide dans la chambre d'évaporation est poussé au maximum (< 10⁻³ mbar).

Le distillat contenant les esters éthyliques à chaines courtes (C14 et C16 majoritairement) et le résidu contenant les esters éthyliques d'acides gras à longues chaînes sont acheminés via les circuits de collecte vers les cuves de stockage inertées.

A ce stade, environ 2.6 kg de distillat et 3.6 kg de résidu sont récupérés.

Les compositions en esters éthyliques sont les suivantes :

| Nomenclature | **CHARGE** | | **Distillat** | | **Résidu** | |
|---|---|---|---|---|---|---|
| | g/100g brut* | %aire p/r AGt ** | g/100g brut* | %aire p/r AGt ** | g/100g brut* | %aire p/r AGt ** |
| C14 | 7 | 7.7 | 15.9 | 16.3 | 0 | 0 |
| C16 | 16,6 | 18.2 | 40.1 | 41.2 | 1,6 | 1.8 |
| Osbond | 12.9 | 14.5 | 5.9 | 6 | 20,3 | 22.8 |
| DHA | **33.6** | **38** | **14.2** | **14.6** | **53.9** | **60.6** |
| *Autres* | *19.3* | 21.6 | *21.2* | *21.9* | *9.3* | *14.8* |
| **Total** | *89.4* | 100 | 97.3 | 100 | 85.1 | 100 |

| | | | | | | |
|---|---|---|---|---|---|---|
| * pourcentage massique du composé dans le mélange brut ** pourcentage du composé relativement à la fraction esters éthyliques (répartition de surface en CPG) | | | | | | |

Le rendement en DHA de la séparation décrite dans cette étape est d'environ 84% (relativement à la perte de DHA dans le distillat).

### Etape 4 : Purification des esters :

Une unité de Short Path Distillation de type Short Path Distillation VTA VK 83-6-SKR-T est utilisée.

A partir du réservoir d'alimentation inerté à l'azote, 3.6 kg d'esters éthyliques sont pompés à 5 kg/h vers le dégazeur à une température de 100°C.

En sortie du dégazeur, les esters éthyliques traversent la chambre d'évaporation ("court trajet") à travers un circuit maintenu à 85°C.

La température de l'évaporateur est ajustée à 200°C.

Le condenseur est réglé sur une température de 20°C. Le vide dans la chambre d'évaporation est poussé au maximum (< 10⁻³ mbar).

Le distillat contenant les esters éthyliques de Pufa's et le résidu contenant les impuretés sont acheminés via les circuits de collecte vers les cuves de stockage inertées.

A ce stade, environ 2.9 kg de distillat et 0.4 kg de résidu sont récupérés.

Les compositions en esters éthyliques sont les suivantes :

| Nomenclature | **CHARGE** | | **Distillat** | | **Résidu** | |
|---|---|---|---|---|---|---|
| | g/100g brut* | %aire p/r AGt ** | g/100g brut* | %aire p/r AGt ** | g/100g brut* | %aire p/r AGt ** |
| C14 | 0 | 0 | 0 | 0 | 0 | 0 |
| C16 | 1,6 | 1.8 | 1.8 | 1.8 | 0.2 | 1 |
| Osbond | 20,3 | 22.8 | 22.5 | 22.9 | 5.6 | 24 |
| DHA | **53.9** | **60.6** | **59.4** | **60.5** | **14.8** | **63.7** |
| *Autres* | *9.3* | *14.8* | *10.2* | *14.8* | 2.7 | *11.3* |
| **Total** | 85.1 | 100 | 93.9 | 100 | 23.3 | 100 |

| | | | | | | |
|---|---|---|---|---|---|---|
| * pourcentage massique du composé dans le mélange brut ** pourcentage du composé relativement à la fraction esters éthyliques (répartition de surface en CPG) | | | | | | |

Le rendement en DHA de la séparation décrite dans cette étape est d'environ 97% (relativement à la perte de DHA dans le distillat).

## Revendications

1. Procédé de préparation d'une huile enrichie en esters éthyliques de l'acide docosahexaénoïque (DHA) produit par fermentation de microalgues de la famille des Thraustochytriales, **caractérisé en ce qu'**il comprend les étapes suivantes :
1) préparer une huile brute contenant un mélange de triglycérides riches en DHA et d'insaponifiables composés essentiellement de squalène, à partir d'une fermentation de microalgues de la famille des Thraustochytriales,
2) éventuellement, raffiner l'huile brute ainsi obtenue par un enchaînement d'étapes de dégommage, désacidification, décoloration et désodorisation,
3) extraire le squalène par distillation moléculaire dite de "court trajet" de manière à obtenir un raffinat débarrassé du squalène,
4) trans-estérifier le raffinat ainsi obtenu par trans-estérification alcoolique en présence d'un catalyseur basique ou enzymatique, de préférence enzymatique,
5) fractionner le mélange d'esters d'acides gras à l'étape 4) par distillation moléculaire dite de "court trajet", de manière à obtenir un extrait riche en esters d'acides gras à chaînes courtes et un raffinat très riche en esters d'acides gras à chaînes longues,
6) purifier le mélange d'esters d'acides gras à chaîne longue obtenus lors de l'étape 5) par distillation moléculaire dite de "court trajet", de manière à obtenir un extrait très riche en esters à chaîne longue débarrassé de ses impuretés,
7) éventuellement, raffiner ledit extrait très riche en esters à chaîne longue par un enchaînement d'étapes de décoloration et désodorisation,
8) recueillir l'huile enrichie en esters éthyliques de DHA ainsi obtenue.

2. Procédé selon la revendications 1, **caractérisé en ce que** les microalgues appartenant à la famille des Thraustochytriales sp sont choisies parmi des microalgues des espèces *Schizochytrium sp., Aurantiochytrium sp.* et *Thraustochytrium sp.*

3. Procédé selon la revendication 1 ou 2, **caractérisé en ce que** les étapes de distillation moléculaire sont conduites sous vide poussé, à une valeur inférieure à 0,1 mbar.

4. Procédé selon l'une quelconque des revendications 1 à 3, **caractérisé en ce que** le « court trajet » s'entend d'une mise en contact d'une durée inférieure 1 minute.

5. Procédé selon l'une quelconque des revendications 1 à 4, **caractérisé en ce que** la température de l'évaporateur dans l'étape 3) est ajustée dans une gamme allant de 200 à 240°C.

6. Procédé selon l'une quelconque des revendications 1 à 5, **caractérisé en ce que** la température de l'évaporateur dans l'étape 5) est ajustée dans une gamme allant de 100 à 150°C.

7. Procédé selon l'une quelconque des revendications 1 à 6, **caractérisé en ce que** la température de l'évaporateur dans l'étape 6) est ajustée dans une gamme allant de 180 à 220°C.

## Patentansprüche

1. Verfahren zur Herstellung eines mit Ethylestern der Docosahexaensäure (DHA) angereicherten Öls, das durch Fermentation von Mikroalgen der Familie Thraustochytriales hergestellt wird, **dadurch gekennzeichnet, dass** es die folgenden Schritte umfasst:
1) Herstellen eines rohen Öls, das eine Mischung aus DHA-reichen Triglyceriden und unverseifbaren Bestandteilen enthält, die im Wesentlichen aus Squalen bestehen, ausgehend von einer Fermentation von Mikroalgen der Familie Thraustochytriales,
2) gegebenenfalls Raffinieren des so gewonnenen Rohöls durch eine Abfolge von Schritten der Entschlackung, Entsäuerung, Entfärbung und Desodorierung,
3) Extrahieren des Squalens durch sogenannte "Kurzweg"-Molekulardestillation, um ein von Squalen befreites Raffinat zu erhalten,
4) Umesterung des so erhaltenen Raffinats durch alkoholische Umesterung in Gegenwart eines basischen oder enzymatischen, vorzugsweise enzymatischen Katalysators,
5) Fraktionieren der Fettsäureestermischung in Schritt 4) durch sogenannte "Kurzweg"-Molekulardestillation, um einen Extrakt, der reich an kurzkettigen Fettsäureestern ist, und ein Raffinat, das sehr reich an langkettigen Fettsäureestern ist, zu erhalten,
6) Reinigen des in Schritt 5) erhaltenen Gemischs langkettiger Fettsäureester durch sogenannte "Kurzweg"-Molekulardestillation, um einen Extrakt zu erhalten, der sehr reich an langkettigen Estern ist, und der von Verunreinigungen befreit ist,
7) gegebenenfalls Raffinieren dieses an langkettigen Estern sehr reichen Extrakts durch eine Abfolge von Schritten der Entfärbung und Desodorierung,
8) Sammeln des so erhaltenen Öls, das mit DHA-Ethylestern angereichert ist.

2. Verfahren nach Anspruch 1, **dadurch gekennzeichnet, dass** die Mikroalgen, die zur Familie der Thraustochytriales sp. gehören, ausgewählt sind aus Mikroalgen der Spezies *Schizochytrium sp., Aurantiochytrium sp.* und *Thraustochytrium sp.*

3. Verfahren nach Anspruch 1 oder 2, **dadurch gekennzeichnet, dass** die molekularen Destillationsschritte in einem Hochvakuum mit einem Wert von weniger als 0,1 mbar durchgeführt werden.

4. Verfahren nach einem der Ansprüche 1 bis 3, **dadurch gekennzeichnet, dass** unter "Kurzweg" ein Inkontaktbringen von weniger als 1 Minute Dauer zu verstehen ist.

5. Verfahren nach einem der Ansprüche 1 bis 4, **dadurch gekennzeichnet, dass** die Temperatur des Verdampfers in Schritt 3) in einem Bereich von 200 bis 240°C eingestellt wird.

6. Verfahren nach einem der Ansprüche 1 bis 5, **dadurch gekennzeichnet, dass** die Temperatur des Verdampfers in Schritt 5) in einem Bereich von 100 bis 150°C eingestellt wird.

7. Verfahren nach einem der Ansprüche 1 bis 6, **dadurch gekennzeichnet, dass** die Temperatur des Verdampfers in Schritt 6) in einem Bereich von 180 bis 220°C eingestellt wird.

## Claims

1. A process for preparing an oil enriched with ethyl esters of docosahexaenoic acid (DHA) produced by fermentation of microalgae of the Thraustochytriales family, **characterised in that** it comprises the following steps:
1) preparing a crude oil containing a mixture of DHA-rich triglycerides and unsaponifiables essentially composed of squalene, from a fermentation of microalgae of the Thraustochytriales family,
2) optionally, refining the crude oil thus obtained by a sequence of degumming, deacidification, discolouration and deodorisation steps,
3) extracting squalene by a so-called "short path" molecular distillation so as to obtain a squalene-free raffinate,
4) trans-esterifying the raffinate thus obtained by alcoholic trans-esterification in the presence of a basic or enzymatic catalyst, preferably enzymatic,
5) fractionating the mixture of fatty acid esters in step 4) by a so-called "short step" molecular distillation, so as to obtain a short-chain fatty acid ester-rich extract and a long-chain fatty acid ester-highly rich raffinate,
6) purifying the mixture of long-chain fatty acid esters obtained in step 5) by a so-called "short path" molecular distillation, so as to obtain a long-chain ester-highly rich extract free of its impurities,
7) optionally, refining said long-chain ester-highly rich extract by a sequence of discolouration and deodorisation steps,
8) collecting the oil enriched with DHA ethyl esters thus obtained.

2. The process according to claim 1, **characterised in that** the microalgae belonging to the Thraustochytriales sp. family are selected from microalgae of *Schizochytrium sp., Aurantiochytrium sp.* and *Thraustochytrium sp.* species.

3. The process according to claim 1 or 2, **characterised in that** the molecular distillation steps are conducted under high vacuum, at a value less than 0.1 mbar.

4. The process according to any of claims 1 to 3, **characterised in that** the "short path" is understood to mean contacting of a duration less than 1 minute.

5. The process according to any of claims 1 to 4, **characterised in that** the temperature of the evaporator in step 3) is adjusted in a range from 200 to 240 °C.

6. The process according to any of claims 1 to 5, **characterised in that** the temperature of the evaporator in step 5) is adjusted in a range from 100 to 150 °C.

7. The process according to any of claims 1 to 6, **characterised in that** the temperature of the evaporator in step 6) is adjusted in a range from 180 to 220 °C.
